(19) Europäisches Patentamt
European Patent Office
Office européen des brevets

(11) **EP 3 816 319 B1**

(12) **EUROPÄISCHE PATENTSCHRIFT**

(45) Veröffentlichungstag und Bekanntmachung des Hinweises auf die Patenterteilung:
**14.09.2022   Patentblatt 2022/37**

(21) Anmeldenummer: **20204145.5**

(22) Anmeldetag: **27.10.2020**

(51) Internationale Patentklassifikation (IPC):
*C23C 2/02* (2006.01)  *C23C 2/06* (2006.01)
*C23C 2/40* (2006.01)  *B32B 15/01* (2006.01)
*C22C 38/00* (2006.01)  *C21D 9/46* (2006.01)
*C21D 1/74* (2006.01)  *C21D 1/673* (2006.01)
*C21D 1/76* (2006.01)  *C21D 8/02* (2006.01)
*C21D 9/56* (2006.01)  *C22C 38/04* (2006.01)

(52) Gemeinsame Patentklassifikation (CPC):
**C23C 2/02; B32B 15/013; C21D 1/673; C21D 1/74;**
**C21D 1/76; C21D 8/0226; C21D 8/0257;**
**C21D 9/46; C21D 9/561; C22C 38/04; C23C 2/06;**
**C23C 2/40;** C21D 2251/00

(54) **VERFAHREN ZUR HERSTELLUNG EINES HOCHFESTEN STAHLBANDES MIT VERBESSERTER HAFTUNG ZINKBASIERTER SCHMELZTAUCHÜBERZÜGE**

METHOD FOR PRODUCING A HIGH STRENGTH STEEL STRIP WITH IMPROVED ADHESION OF ZINC-BASED HOT DIP COATINGS

PROCÉDÉ DE FABRICATION D'UNE BANDE EN ACIER HAUTE RÉSISTANCE À ADHÉSION AMÉLIORÉE DES ENROBAGES PAR GALVANISATION À CHAUD À BASE DE ZINC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.10.2019   DE 102019129191**

(43) Veröffentlichungstag der Anmeldung:
**05.05.2021   Patentblatt 2021/18**

(73) Patentinhaber: **Salzgitter Flachstahl GmbH**
**38239 Salzgitter (DE)**

(72) Erfinder:
• **DEBEAUX, Marc**
**47251 Duisburg (DE)**
• **KÖPPER, Nils**
**47251 Duisburg (DE)**
• **KÖHLER, Kai**
**47251 Duisburg (DE)**
• **LUTHER, Friedrich**
**47251 Duisburg (DE)**

(74) Vertreter: **Moser Götze & Partner Patentanwälte mbB**
**Paul-Klinger-Strasse 9**
**45127 Essen (DE)**

(56) Entgegenhaltungen:
EP-A1- 3 034 646       EP-A1- 3 170 913
WO-A1-2019/154680       DE-A1-102018 107 435
DE-U1-202015 104 790

**Beschreibung**

Die Erfindung betrifft ein Verfahren zur Herstellung eines hochfesten kalt- oder warmgewalzten Stahlbandes mit verbesserter Haftung eines auf Basis von Zink, im Wesentlichen mit Magnesium und Aluminium legierten metallischen Schmelztauchüberzugs. Nachfolgend werden kalt- oder warmgewalzte Stahlbänder als Stahlflachprodukte zusammengefasst. Des Weiteren betrifft die Erfindung ein Stahlflachprodukt mit verbesserter Haftung des zinkbasierten Schmelztauchüberzugs sowie die Verwendung eines solchen Stahlflachproduktes.

Dieser, als Korrosionsschutz dienende zinkbasierte Überzug, wird üblicherweise im kontinuierlichen Durchlaufverfahren in einem Schmelzbad auf das Stahlflachprodukt aufgebracht. Eine typische Zinklegierung besteht dabei neben einer Basis aus Zink und unvermeidbaren Verunreinigungen aus bis zu 8 Gew.-% Mg, bis zu 8 Gew.-% Al und aus nicht mehr als 0,3 % Fe im Schmelzbad. Optional können eines oder mehrere Zusatzelemente wie Pb, Sb, Ti, Ca, Mn, Sn, La, Ce, Cr, Ni, Zr oder B bis zu 0,2 Gew.-% je Legierungselement zulegiert werden.

Als hochfeste Stahlflachprodukte werden im Folgenden Stahlbänder mit Dehngrenzen von mindestens 260 MPa und Zugfestigkeiten von mindestens 450 MPa bezeichnet. Übliche Bruchdehnungen A80 liegen bei diesen Stählen bei mindestens 5 %. Übliche Dicken dieser Stahlflachprodukte liegen bei etwa 0,45 mm bis 3,0 mm für kaltgewalzte Stahlflachprodukte und etwa 1,8 mm bis 4,0 mm für warmgewalzte Stahlflachprodukte. Stahlflachprodukte können sowohl als Band, wie auch abgetafelt, als Blechabschnitt vorliegen.

Die Offenlegungsschrift WO 2019/154680 A1 offenbart ein Verfahren zur Herstellung eines kalt- oder warmgewalzten Stahlbandes mit verbesserter Haftung metallischer Schmelztauchüberzüge. Dies wird dadurch erreicht, dass das Stahlband neben Eisen und unvermeidbaren Verunreinigungen sauerstoffhaltige Elemente enthält, nämlich in Gewichts-% mehr als 0,02 Al, mehr als 0,01 Cr, mehr als 1,3 Mn oder mehr als 0,1 Si. Das Stahlband wird gereinigt, oxidationsbehandelt, geglüht und anschließend mit einem Schmelztauchüberzug beschichtet. Die Festigkeit der Stähle liegt zwischen 500 und 1700 MPa.

Aus der deutschen Gebrauchsmusterschrift DE 20 2015 104790 U1 ist ein Warmband aus einem bainitischen Mehrphasenstahl mit einer Zn-Mg-Al-Beschichtung bekannt, das sich durch eine optimierte Kombination aus Festigkeit, Verformbarkeit und Korrosionsschutz auszeichnet. Durch die chemische Zusammensetzung des Trägermaterials und eine spezielle Beschichtung ist eine gute Schweißbarkeit und Umformbarkeit gegeben. Dieses Warmband wird zur Herstellung von umgeformten, dynamisch hoch belastbaren und gegen korrosive und abrasive Einwirkungen widerstandsfähigen Bauteilen, insbesondere Kraftfahrzeugteilen, benutzt.

Die europäische Patentanmeldung EP 3 170 913 A1 offenbart ein Verfahren zur Steuerung der Oberflächenreaktionen auf einem Stahlband, das einen Ofen mit mehreren Bereichen durchläuft, sowie einen speziell für dieses Verfahren entwickelten Ofen. Jeder Bereich ist von den anderen zur besseren Kontrolle der Innenatmosphäre abgetrennt. Um die bestmögliche Oberflächenbenetzbarkeit bei den legierten Stählen zu gewährleisten, werden unterschiedliche Prozessparameter eingestellt. Die Stahlbänder werden in einem ersten Bereich bei einer kontrollierten $CO+CO_2$-Konzentration erhitzt. In einem zweiten Bereich folgt die Oxidierung bei einer konstant gehaltenen Temperatur und anschließend werden die Stahlbänder im nächsten Bereich bei einer kontrollierten $H_2$-Konzentration erhitzt.

In der Offenlegungsschrift DE 10 2018 107435 A1 wird ein Verfahren zur Voroxidation von hochfestem Bandstahl in einer in einem Ofenraum angeordneten Reaktionskammer mit einer im Inneren stark oxidierenden Atmosphäre während der rekristallisierenden Glühung beschrieben, die der Erreichung der für die anschließende Schmelztauchbeschichtung geeigneten Oberflächeneigenschaften dient. Die Reaktionskammer ist an einem Bandeintritt und einem Bandaustritt gegen Gasaustausch zwischen dem Ofenraum und der Reaktionskammer abgedichtet, sodass das eingeleitete Gas in einem geschlossenen Kreislauf permanent umgewälzt wird. Dadurch wird eine gleichmäßig ausgebildete Oxidschicht auf der Bandoberfläche erzeugt.

Die europäische Patentanmeldung EP 3 034 646 A1 offenbart Verfahren zur Herstellung von Cr-haltigen, hochfesten feuerverzinkten und hochfesten galvanisierten Stahlblechen mit guter Haftung der Beschichtung und einer guten Oberflächenqualität bekannt. Bei der Herstellung von hochfesten feuerverzinkten Stahlblechen, wird das Stahlblech in einer $H_2$-reichen Atmosphäre und einem definierten Taupunkt erhitzt, danach in einer wässrigen alkalischen Lösung elektrolytisch behandelt, danach wieder in einer $H_2$-reichen Atmosphäre und einem definierten Taupunkt erhitzt und anschließend beschichtet.

Aus der deutschen Patentanmeldung DE 10 2011 117 572 A1 ist ein höherfester Mehrphasenstahl mit Dual-, Bainit- oder Complexphasengefüge und ein Verfahren zur Herstellung eines aus diesem Mehrphasenstahl hergestellten kalt- oder warmgewalzten Stahlbandes bekannt. Dieses Stahlband wird anschließend mit einer Beschichtung aus Zink oder Zink-Magnesium schmelztauchbeschichtet. Das beschichtete Stahlband weist eine optimierte Kombination aus hoher Festigkeit, guter Verformbarkeit und gutem Korrosionsschutz auf und eignet sich besonders für einen Einsatz im Fahrzeugkarosseriebau. Der Mehrphasenstahl besteht aus den Elementen (Gehalte in Gewichtsprozent und bezogen auf die Stahlschmelze): C 0,060 bis <= 0,115, Al 0,020 bis <= 0,060, Si 0,100 bis <= 0,500, Mn 1,300 bis <= 2,500, P <= 0,025, S <= 0,0100, Cr 0,280 bis <= 0,480, Mo <= 0,150, Ti 0,005 bis <= 0,050, Nb 0,005 bis <= 0,050, B 0,0005 bis <= 0,0060, N <= 0,0100 sowie Rest Eisen, einschließlich üblicher stahlbegleitender zuvor nicht erwähnter Elemente und weist Streckgrenzen von über 500 MPa und Zugfestigkeiten von über 800 MPa auf.

Aus der Offenlegungsschrift WO 2008/102009 A1 ist ein kaltgewalztes und kontinuierlich geglühtes hochfestes Stahlband bekannt, bestehend aus (in Gewichts-%): 0,04-0,30 C, 1,0-3,5 Mn, 0-1,0 Si, 0,05-2,0 Al, 0-1,0 Cr, 0-0,02 P, 0-0,01 S, 0-0,25 V, 0-0,1 Nb, 0-0,20 Ti, 0-0,015 N, 0-0,010 B und unvermeidbare Verunreinigungen mit Restanteil Eisen, versehen mit einer feuerverzinkten oder nach dem Verzinken wärmebehandelten Zinklegierungs-Deckschicht, wobei die Zinklegierung aus 0,3-4,0 Mg, 0,05 - 6,0 Al besteht, mit optional höchstens 0,2 % eines oder mehrerer Zusatzelemente und unvermeidbaren Verunreinigungen, wobei der Rest Zink ist. Die Zugfestigkeit der Stähle liegt bei etwa 600 MPa.

Aus der Offenlegungsschrift WO 2013/007578 A2 ist bekannt, dass hochfeste Stähle, mit Zugfestigkeiten von mindestens 500 MPa oder höchstfeste Stähle mit mindestens 1000 MPa, mit höheren Gehalten an Elementen in Gewichts-% bis zu 35,0 Mn, bis zu 10,0 Al, bis zu 10,0 Si, bis zu 5,0 Cr im Zuge der dem schmelztauchbeschichten vorgeschalteten Glühung des Stahlbandes, selektiv passive, nicht benetzbare Oxide auf der Stahloberfläche bilden, wodurch die Haftung des Überzugs auf der Stahlbandoberfläche verschlechtert wird und dies gleichzeitig zur Ausbildung von unverzinkten Stellen führen kann. Diese Oxide bilden sich auf Grund der herrschenden Glühatmosphäre, die zwangsläufig immer geringe Spuren an $H_2O$ oder $O_2$ enthält und oxidierend auf die genannten Elemente wirkt.

Offenbart wird zur Lösung des Problems in der genannten Schrift unter anderem ein Verfahren, bei dem im Zuge einer Glühung unter oxidierenden Bedingungen in einem ersten Schritt eine Voroxidation des Stahlbandes stattfindet, mit der eine gezielt deckende FeO-Schicht erzeugt wird, die eine selektive externe Oxidation der Legierungselemente verhindert. In einem zweiten Schritt wird diese Schicht anschließend wieder zu metallischem Eisen reduziert.

Eine weitere Lösung dieses Problems ist aus der Patentschrift DE 693 12 003 T2 bekannt. Es wird ein Verfahren zur Herstellung eines beschichteten Stahlbleches mit reduzierten Oberflächenfehlern offenbart, bei welchem auf mindestens eine Oberfläche eines Stahlbandes eine Beschichtung aus Zink oder einer Zinklegierung aufgetragen wird. Hierbei sind unmittelbar unter der Beschichtung aus Zink oder einer Zinklegierung eine sauerstoffhaltige Fe-Schicht und unmittelbar unter der Schicht aus Fe eine Schicht, in der sauerstoffaffine Elemente des Stahls konzentriert sind, vorgesehen.

Das kohlenstoffarme oder sehr kohlenstoffarme Stahlband, auf das die Fe-Plattierung appliziert ist, enthält mindestens eine Komponente, ausgewählt aus der Gruppe Si, Mn, P, Ti, Nb, Al, Ni, Cu, Mo, V, Cr und B in einer Menge von mindestens 0,1 Gewichts-% für Si, Ti, Ni, Cu, Mo, Cr und V und mindestens 0,5 Gewichts-% für Mn, mindestens 0,05 Gewichts-% für P, Al und Nb und mindestens 0,001 Gewichts-% für B. Die Schicht aus Fe weist ein Auftragsgewicht von 0,1 bis 10 g/m$^2$, einen Sauerstoffgehalt von 0,1 bis 10 Gewichts-% und einen Kohlenstoffgehalt von 0,01 Gewichts-% bis weniger als 10 Gewichts-% auf. Mechanische Kennwerte für die untersuchten Stähle sind nicht angegeben.

Ziel soll hierbei sein, dass an der Grenzfläche zwischen der sauerstoffhaltigen Fe-Schicht und dem Stahlband während des Glühens vor der Schmelztauchbeschichtung eine Schicht entsteht, in der im Stahl enthaltene sauerstoffaffine Elemente konzentriert sind. Hierdurch soll die weitere Diffusion der im Stahl enthaltenen sauerstoffaffinen Elemente in Richtung auf die Fe-Plattieroberfläche verhindert werden und eine gute Verzinkbarkeit gewährleistet werden.

Die untersuchten Stähle weisen C-Gehalte von 0,0025 Gewichts-% und kleiner auf, mechanische Eigenschaften der untersuchten Stähle werden nicht offenbart.

Es hat sich allerdings gezeigt, dass bei den vorbekannten Lösungen zur Verbesserung der Benetzbarkeit der Stahloberfläche noch keine zufriedenstellende, reproduzierbare Haftung des Überzugs bei hochfesten Stählen mit höheren Gehalten an Legierungselementen erzielt werden kann. Hierbei spielen insbesondere die Elemente Si, Mn, Cr und Al eine besondere Rolle.

Ursächlich hierfür ist die Ausbildung eines massiven Saums von Oxiden der Legierungselemente an der Unterseite der (nach einer reduzierenden Glühung dann reduzierten) Eisenoxidschicht bzw. sauerstoffhaltigen Eisenschicht. Dieser Oxidsaum aus Oxiden der Legierungselemente stellt eine Schwachstelle des Systems in Bezug auf die Haftung dar. Das heißt, an der Grenzfläche der reduzierten Eisenoxidschicht bzw. sauerstoffhaltigen Eisenschicht zum Stahlsubstrat kann hier oftmals ein Haftungsversagen z. B. bei einem Umformprozess beobachtet werden. Diese Probleme treten insbesondere dann auf, wenn die Gehalte an sauerstoffaffinen Elementen wie z.B. Si, Mn oder Cr in Summe 1,5 Gew-% oder mehr im Stahl betragen.

Aufgabe der Erfindung ist es deshalb, ein Verfahren zur Herstellung eines mit einem zinkbasierten Überzug schmelztauchbeschichteten, hochfesten kalt- oder warmgewalzten Stahlflachprodukts mit verbesserter Beschichtbarkeit anzugeben.

Die Lehre der Erfindung umfasst ein Verfahren zur Herstellung eines schmelztauchbeschichteten, hochfesten Stahlflachproduktes mit folgenden Schritten:

- Bereitstellen eines Stahlflachproduktes mit folgender chemischer Zusammensetzung in Massen-%:

       C: 0,04 bis 0,40, vorteilhaft 0,04 bis 0,30, besonders vorteilhaft 0,08 bis 0,23
       Mn: 0,8 bis 3,0, vorteilhaft 1,0 bis 2,5
       Si: ≤ 2,0, vorteilhaft ≤ 1,8, besonders vorteilhaft ≤ 1,5, insbesondere ≤ 0,7

Al: 0,01 bis 2,0, vorteilhaft bis zu 0,8, besonders vorteilhaft bis zu 0,4
P ≤ 0,1,
S ≤ 0,005,
N ≤ 0,02,
sowie optional eines oder mehrere der folgenden Elemente:

Cr: 0,1 bis 0,9, vorteilhaft 0,2 bis 0,7
B: 0,001 bis 0,008
Ti: 0,01 bis 0,1
V: 0,01 bis 0,2
Nb: 0,01 bis 0,1, vorteilhaft 0,02 bis 0,06
Mo: 0,05 bis 0,5, vorteilhaft 0,1 bis 0,25
Ni: 0,15 bis 0,5
Cu: 0,15 bis 0,2
Rest Eisen und unvermeidbare stahlbegleitende Verunreinigungen,

- Reinigen der Oberfläche des Stahlflachproduktes
- Aufbringen einer eisenbasierten Schicht als Vorbeschichtung auf die Oberfläche des Stahlflachproduktes, mit einer mittleren Dicke zwischen 0,1 $\mu$m und 1,2 $\mu$m, wobei die eisenbasierte Beschichtung nach der Beschichtung und vor der Glühbehandlung Sauerstoff enthält
- Glühen in einer reduzierenden Ofenatmosphäre bei Temperaturen oberhalb von 700 °C Oberfläche, wobei der dekadische Logarithmus aus dem Verhältnis von Wasserstoff- und Wasserpartialdruck in der Ofenatmosphäre dem folgenden Formelzusammenhang entspricht:

(1)

$$0,35 + 0,053\,x \le \lg\frac{p_{H_2}}{p_{H_2O}} \le 3,1 + 0,09\,x$$

vorteilhaft

(2)

$$0,88 + 0,059\,x \le \lg\frac{p_{H_2}}{p_{H_2O}} \le 2,6 + 0,08\,x$$

besonders vorteilhaft

(3)

$$1,07 + 0,061\,x \le \lg\frac{p_{H_2}}{p_{H_2O}} \le 2,4 + 0,07\,x$$

insbesondere

$$(4)\quad 1,75 + 0,063\,x \le lg\frac{p_{H_2}}{p_{H_2O}} \le 2,4 + 0,07\,x$$

mit

x= Sauerstoffgehalt in der eisenbasierten Beschichtung in Massen-% nach der Abscheidung und vor der Glühbehandlung
$p_{H2}$= Wasserstoffpartialdruck in bar
$P_{H2O}$= Wasserpartialdruck in bar

- Schmelztauchbeschichten des so vorbehandelten und geglühten Stahlflachproduktes mit einer zinkbasierten Schmelze, die im Wesentlichen 0,5 bis 8 Massen-% Magnesium und 0,5 bis 8 Massen-% Aluminium enthält, vorteilhaft 0,7 bis 3 Massen-% Magnesium und 1,0 bis 3,0 Massen-% Aluminium, besonders vorteilhaft 0,8 bis 1,5 Massen-% Magnesium und 1,3 bis 2,2 Massen-% Aluminium enthält, weniger als 1 Massen-% Eisen, sowie unvermeidbare Verunreinigungen.

Weiterhin umfasst die Lehre der Erfindung ein nach dem Verfahren hergestelltes Stahlflachprodukt sowie die Verwendung eines Stahlflachproduktes zur Herstellung von Teilen für Kraftfahrzeuge.

Der Kern der Erfindung besteht bei dem Verfahren aus einer auf die Oberfläche des Stahlflachproduktes aufgebrachten eisenbasierten Beschichtung als Vorbeschichtung mit einer nachfolgenden Glühung in einer definierten Glühatmosphäre mit optimiertem Verhältnis aus Wasserstoff- und Wasserpartialdruck, welche abhängig vom Sauerstoffgehalt der eisenbasierten Vorbeschichtung eingestellt wird und anschließender Schmelztauchbeschichtung.

Der große Vorteil des Verfahrens besteht darin, dass unabhängig von der aktuellen Legierungszusammensetzung des Stahlbandes, gleichmäßige und reproduzierbare Haftungsbedingungen für den Überzug auf der Stahlbandoberfläche erreicht werden.

Erfindungsgemäß enthält die eisenbasierte Beschichtung zudem Sauerstoff, dessen Gehalt mehr als 4 Massen-%, vorteilhaft 6-12 Massen-% Sauerstoff beträgt.

Da der Wasserstoffgehalt in einer kontinuierlichen Feuerverzinkungslinie oftmals konstant gehalten wird, kann die Einstellung des optimalen Verhältnisses aus Wasserstoff- und Wasserpartialdruck vorteilhaft durch Zuführung von Wasser oder Wasserdampf in den der Feuerverzinkungslinie vorgeschalteten Glühofen erfolgen.

Die Bestimmung der Feuchtemenge im Glühgas erfolgt aus technischen Gründen im Regelfall über eine Taupunktmessung, die sich jedoch über folgende Formel (TP: Taupunkt) einfach in den Wasserpartialdruck ($p_{sat}H_2O$) umrechnen lässt.

$$\log_{10} p_{sat}H_2O = \begin{cases} 9,80\ TP\ /\ (273,15 + TP) - 2,22 & wenn\ TP \leq 0\,°C \\ 7,58\ TP\ /\ (240 + TP) - 2,22 & wenn\ TP > 0\,°C \end{cases} [bar]$$

Mit dem in der Glühatmosphäre gemessenen Wasserstoffgehalt kann so das Verhältnis aus Wasserstoff- und Wasserpartialdruck ausgerechnet und optimal eingestellt werden.

Die Einstellung des optimalen Verhältnisses aus Wasserstoff- und Wasserpartialdruck in Kombination mit einer eisenbasierten Vorbeschichtung, die vorteilhaft Sauerstoff enthält, ist notwendig, da ansonsten eine unzureichende Zinkhaftung resultieren kann, oder aber eine zu starke Randentkohlung des Stahlflachproduktes auftritt, wodurch die technologischen Kennwerte verändert werden können. Dieser Zusammenhang wird im Folgenden näher erläutert.

Da die üblichen Glühatmosphären in einer Feuerverzinkungslinie zwar reduzierend für Eisen aber oxidierend für die meisten Legierungselemente wie Si, Mn, Cr und Al sind, kommt es während der Glühung zu einer Oxidation dieser Legierungselemente im oberflächennahen Bereich des Stahlbandes. Diese Oxidation kann auf der Oberfläche stattfinden (externe Oxidation) oder aber unterhalb der Oberfläche (interne Oxidation). Maßgeblich für den Ort der Oxidation sind nach der Theorie von Wagner die gegenläufigen Diffusionsströme von Sauerstoffatomen und den sauerstoffaffinen Atomen der Legierungselemente. Durch Zuführung von Wasser oder Wasserdampf in einen Glühofen kann so die Sauerstoffdiffusion in das Stahlsubstrat gesteigert und dadurch die interne Oxidation der Legierungselemente verstärkt werden.

Sauerstoffaffine Legierungselemente können die resultierende Zinkhaftung bei Stahlband mit einer eisenbasierten Vorbeschichtung in zweierlei Hinsicht schwächen: Zum einen dadurch, dass diese bei der Glühbehandlung durch die eisenbasierte Vorbeschichtung diffundieren und auf der Oberfläche externe Oxide ausbilden, was den Verbund zwischen der eisenbasierten Vorbeschichtung und der Zinkschicht schwächt.

Zum anderen dadurch, dass diese Oxide sich unmittelbar unterhalb der eisenbasierten Vorbeschichtung als kontinuierlicher Oxidsaum ausbilden, was den Verbund zwischen der Vorbeschichtung und der Stahloberfläche schwächt.

Um dies zu verhindern, muss der Diffusionsstrom von Sauerstoffatomen ausreichend hoch sein. Gleichzeitig sollte jedoch eine zu starke Entkohlung des Stahls unterbunden werden, um die technologischen Kennwerte nicht zu verändern. Je höher der Sauerstoffgehalt in der eisenhaltigen Vorbeschichtung eingestellt ist, desto weniger Sauerstoff muss über die Befeuchtung der Glühatmosphäre zugeführt werden.

Im Rahmen von Laborversuchen zur Haftungsverbesserung des Überzugs auf der Oberfläche des Stahlflachproduktes wurde der folgende vorteilhafte Zusammenhang zwischen dem Sauerstoffgehalt in der eisenbasierten Vorbeschichtung und dem Verhältnis von Wasserstoff- und Wasserpartialdruck in der Glühatmosphäre gefunden:

(1)

$$0{,}35 + 0{,}053\,x \leq \lg\frac{p_{H_2}}{p_{H_2O}} \leq 3{,}1 + 0{,}09\,x$$

vorteilhaft

(2)

$$0{,}88 + 0{,}059\,x \leq \lg\frac{p_{H_2}}{p_{H_2O}} \leq 2{,}6 + 0{,}08\,x$$

besonders vorteilhaft

(3)

$$1{,}07 + 0{,}061\,x \leq \lg\frac{p_{H_2}}{p_{H_2O}} \leq 2{,}4 + 0{,}07\,x$$

insbesondere

$$1{,}75 + 0{,}063\,x \leq lg\frac{p_{H_2}}{p_{H_2O}} \leq 2{,}4 + 0{,}07\,x$$

mit

x= Sauerstoffgehalt in der eisenbasierten Beschichtung in Massen-% nach der Abscheidung und vor der Glühbehandlung
$p_{H2}$= Wasserstoffpartialdruck in bar
$p_{H2O}$= Wasserpartialdruck in bar

Eine erfindungsgemäß gute Haftung des Überzugs auf der Oberfläche des Stahlflachprodukts kann erzielt werden, wenn das Verhältnis von Wasserstoff- und Wasserpartialdruck in der Glühatmosphäre in Abhängigkeit vom Sauerstoffgehalt in der eisenbasierten Vorbeschichtung entsprechend der Gleichungen (1) eingestellt wird. Bei den vorteilhaften Formelzusammenhängen (2) bis (4) wird darüber hinaus die Gefahr einer zu starken Randentkohlung mit negativer Auswirkung auf die technologischen Kennwerte des Stahls weiter reduziert.
Unter der eisenbasierten Schicht wird erfindungsgemäß eine Schicht mit einem Eisengehalt in Massen-% von mehr als 50 % verstanden, die Sauerstoff von mehr als 4 Massen-%, vorteilhaft 6-12 Massen-% enthält.
Die sauerstoffhaltige, eisenbasierte Schicht besteht entweder aus einer stöchiometrischen Eisen-Verbindung, wie z. B. aus Magnetit ($Fe_3O_4$), einer Dispersionsschicht, die metallisches Eisen und Sauerstoff in Form von sauerstoffhaltigen Dispersoiden (z. B. Eisenhydroxide/-oxide, organische Metallkomplexe wie Carboxylate) enthält oder metallischem Eisen, bei dem es während der elektrolytischen Abscheidung zu einem Einbau von sauerstoffhaltigen Verbindungen oder organischen Additiven kommt.
Die Oxide und/oder Hydroxide können in der sauerstoffhaltigen, eisenbasierten Schicht sowohl in Form kristalliner, amorpher oder auch als Mischungen aus kristallinen, wie zum Beispiel Magnetit ($Fe_3O_4$), und amorphen Verbindungen vorliegen. Die Verteilung von amorphen und/oder kristallinen Verbindungen ist nicht eingeschränkt.
Die bevorzugte Abscheidung der eisenbasierten Schicht erfolgt elektrolytisch aus einem Fe(II)- und oder Fe(III)-haltigen Elektrolyten. Hierzu werden typischerweise sulfatische oder chloridische Elektrolyte sowie Kombinationen daraus eingesetzt, deren pH-Wert in der Regel kleiner oder gleich 5,5 ist.
Auch der Einsatz eines basischen Elektrolyten mit einem pH-Wert > 10 ist jedoch unter Einsatz eines geeigneten Komplexbildners wie z. B. Triethanolamin (TEA) möglich. Die elektrolytische Abscheidung erfolgt bei Stromdichten, die unabhängig von der jeweiligen Bandgeschwindigkeit eine über die Bandlänge homogene Abscheidedicke ergeben.

Weiterhin ist die notwendige Stromdichte von der Anodenbaulänge in Bandlaufrichtung und der Bandbreite abhängig. Typische Werte liegen zwischen 1 und 150 A/dm$^2$ pro Bandseite. Unterhalb von 1 A/dm$^2$ werden zu lange Behandlungslängen benötigt, wodurch der Prozess nicht wirtschaftlich betrieben werden kann. Bei Stromdichten oberhalb von 150 A/dm$^2$ wird eine homogene Abscheidung durch Anbrennungen oder Dendritenbildung deutlich erschwert. Die Abscheidezeit ist abhängig von der Behandlungslänge, der Stromdichte, der Stromausbeute und der gewünschten Schichtauflage und liegt typischerweise zwischen 1 s und 30 s je Seite. Beispielhafte Zusammensetzungen wässriger Elektrolyte und Abscheidebedingungen zur Erzeugung eisenbasierter Schichten sind in Tabelle 1 gezeigt.

Tabelle 1

| Elektrolytsystem/Komplexbildner | Zusammensetzung | Bedingungen |
|---|---|---|
| Sulfat | $FeSO_4 \cdot 7H_2O$: 220 g/l<br>$NaSO_4$: 90 g/l | pH 2,2; 35 °C |
| Chlorid | $FeCl_2 \cdot 4H_2O$: 280 g/l<br>KCl: 210 g/l | pH 1,4; 48 °C |
| Sulfat-Chlorid | $FeSO_4 \cdot 7H_2O$: 400 g/l<br>$FeCl_2 \cdot 4H_2O$: 400 g/l<br>$CaCl_2$: 180 g/l | pH 1,6; 85 °C |
| Sulfamat | $Fe(SO_3NH_2)_2$: 220 g/l<br>$NH_4(SO_3NH_2)$: 30 g/l | pH 3,2; 60 °C |
| Fluoroborat | $Fe(BF_4)_2$: 240 g/l<br>NaCl: 8 g/l | pH 2,1; 58 °C |
| Citrat | $FeSO_4 \cdot 7H_2O$: 350 g/l<br>$Fe_2(SO_4)_3$: 10 g/l | pH 2,3; 45 °C |
| | $Na_2SO_4$: 110 g/l<br>Natriumcitrat: 20 g/l | |
| Triethanolamin | $Fe_2(SO_4)_3$: 170 g/l<br>NaOH: 12 g/l<br>$C_6H_{15}NO_3$: 15 g/l | pH 13; 80 °C |

Zur Erzeugung sauerstoffhaltiger, eisenbasierter Schichten wird auch im sauren Milieu ein Komplexbildner für die Eisenionen benötigt. Hierbei handelt es sich typischerweise um eine Verbindung mit einer oder mehreren Carbonylfunktionalitäten, wie Zitronensäure, Essigsäure oder auch Nitrilotriessigsäure (NTA) bzw. deren korrespondierenden Basen oder Ethanolamin.

Als Anodenmaterial kommt vorzugsweise Eisen mit einer Reinheit in Gewichts-% von größer 99,5 zum Einsatz. Auch können Elektrolysezellen mit getrennten Anoden- und Kathodenräumen zur Anwendung kommen, wodurch die Verwendung Sauerstoff erzeugender bzw. unlöslicher Anoden ermöglicht wird. Zur Verringerung der Zellwiderstände kann dem Elektrolyten optional ein Leitsalz zugesetzt werden. Auch der Einsatz von weiteren Additiven, wie zum Beispiel Tensiden, zur Verbesserung der Benetzung und oder Entschäumern ist fallweise sinnvoll.

In einer beispielhaften Ausführung erfolgt die Abscheidung der sauerstoffhaltigen Eisenschicht bei 60 °C mit einer Stromdichte von 60 A/dm$^2$ unter Einsatz einer Eisenanode mit einer Reinheit in Gewichts-% von größer 99,5 in einem wässrigen schwefelsauren Elektrolyten mit folgender Zusammensetzung: 60 g/l Eisen(II), 6 g/l Eisen(III), 25 g/l Natrium, 11 g/l Citrat, pH 1,8.

Nach der Abscheidung der eisenbasierten Schicht wird die Stahlbandoberfläche gespült und vorzugsweise getrocknet, um einen undefinierten Eintrag von Wasser in die Glühofenatmosphäre zu unterbinden.

Die Abscheidung der Schicht kann dabei innerhalb einer oder in mehreren nacheinander angeordneten Elektrolysezellen erfolgen, deren Bauform vorzugsweise horizontal oder vertikal ausgeführt ist. Aufgrund von technischen und wirtschaftlichen Randbedingungen liegt der sinnvolle Sauerstoff Maximalwert bei einem elektrolytischen Verfahren bei maximal 20 Gewichts-%.

Neben einer signifikant verbesserten Haftung des Zn-Mg-Al-Überzugs, führt eine eisenbasierte Schicht, die zusätzlich mehr als 4 % und besonders vorteilhaft 6-12 % Sauerstoff enthält, zu einer erheblichen Anhebung des Absorptions- bzw. Emissionsgrades, wodurch sich die Aufheizrate im Ofen erhöht und die Anlagenleistung im Glühofen verbessert wird. Bei einer eisenbasierten Schicht ohne Sauerstoff verringert sich hingegen die Aufheizrate. Tabelle 2 zeigt beispielhaft gemessene Aufheizraten von Proben, die mit einer sauerstoffhaltigen Eisenvorbeschichtung (Abscheidezeit Fe/O=10 s), mit einer Eisenvorbeschichtung ohne Sauerstoff (Abscheidezeit Fe=10 s) und ohne eine Eisenvorbeschichtung (Abscheidezeiten Fe+Fe/O=0 s) in einem Kammerofen erwärmt wurden.

Die Elektrolytzusammensetzung für die Eisenabscheidung bestand aus VE Wasser mit 300 g/l $FeSO_4 * 7 H_2O$ und 126 g/l $Na_2SO_4 *12H_2O$ sowie einer Zugabe von $H_2SO_4$ bis zum Erreichen eines pH-Wertes von $\leq$ 1,8. Für die Abscheidung der Eisen-Sauerstoffschichten wurde dem Elektrolyten zusätzlich 15 g/L Zitronensäure zugeben.

Bei der sauerstoffhaltigen Eisenvorbeschichtung erhöht sich die Aufheizrate gegenüber der unbehandelten Probe von 6,8 K/s auf 11,2 K/s, bei der sauerstofffreien Eisenvorbeschichtung verringert sich hingegen die Aufheizrate von 6,8 K/s auf 5,7 K/s.

Tabelle 2

| Vorbeschichtung | | | | | Aufheizen RT→700 | | | Aufheizen RT→800 | | |
|---|---|---|---|---|---|---|---|---|---|---|
| Absch eidezeit | | Stromdichte | Elektrolyttemperatur | mittlere Schichtdicke | Zeit | Rate | Ersparnis | Zeit | Rate | Ersparnis |
| Fe [s] | Fe/0 [s] | [A/dm$^2$] | [°C] | [$\mu$m] | s | K/s | % | s | K/s | % |
| - | - | - | - | - | 100 | 6,8 | 0 | 164 | 4,7 | 0 |
| 0 | 10 | 24 | 50 | 0,5 | 61 | 11,2 | 39 | 122 | 6,4 | 25 |
| 10 | 0 | 24 | 50 | 0,5 | 120 | 5,7 | -20 | 203 | 3,8 | -24 |

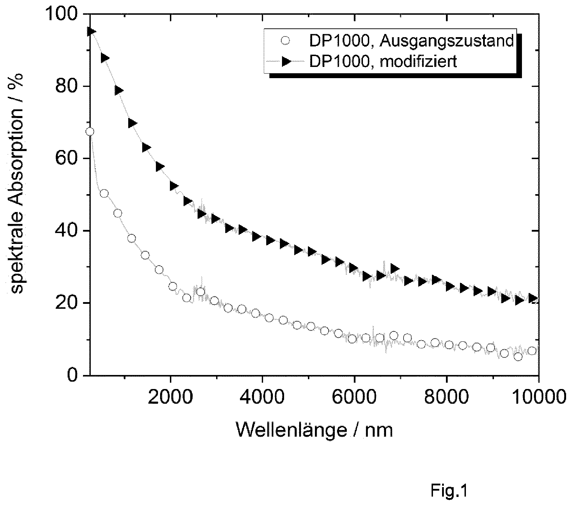

In Figur 1 ist die spektrale Absorption eines Dualphasenstahls ohne Vorbeschichtung (DP1000) sowie mit sauerstoffhaltiger eisenbasierter Vorbeschichtung (DP1000 modifiziert) dargestellt. Die Stahloberfläche mit der sauerstoffhaltigen eisenbasierten Vorbeschichtung zeigt über einen großen Spektralbereich (hier dargestellt: 250 bis 10.000 nm) eine deutlich stärkere Absorption.

In einer vorteilhaften Ausgestaltung der Erfindung wird darüber hinaus die mittlere Dicke der eisenbasierten Beschichtung in Abhängigkeit vom Sauerstoffgehalt in der eisenbasierten Beschichtung und der Stahlzusammensetzung optimal eingestellt.

Je höher der Sauerstoffgehalt ist, desto geringer kann die mittlere Schichtdicke der eisenbasierten Vorbeschichtung bei gleicher Stahlzusammensetzung sein. Bei Stählen mit einer größeren Menge an sauerstoffaffinen Legierungselementen kann die mittlere Dicke der Vorbeschichtung oder aber der Sauerstoffgehalt erhöht werden. Dabei sind nicht alle sauerstoffaffinen Legierungselemente gleich schädlich für eine Verzinkung, weswegen eine elementabhängige Gewichtung notwendig ist. Darüber hinaus ist auch das Verhältnis von Elementen zueinander von Relevanz, da hierdurch die Art der Legierungselementoxide beeinflusst wird (z.B. hochschädliches $SiO_2$ bei großem Si/Mn Verhältnis oder weniger kritisches $Mn_2SiO_4$ bei kleinerem Si/Mn Verhältnis). Durch Laborversuche konnte der folgende vorteilhafte Zusammenhang festgestellt werden:

(5)

$$d_{min} \geq \frac{1,2 \cdot w_{Si} + 0,3 \cdot w_{Mn} + 0,3 \cdot w_{Cr} + 0,5 \cdot w_{Al} + \dfrac{w_{Al}}{w_{Mn}} + 2 \cdot \dfrac{w_{Si}}{w_{Mn}}}{11 + 2,5 \cdot x}$$

besonders vorteilhaft

(6)

$$d_{min} \geq \frac{1,2 \cdot w_{Si} + 0,3 \cdot w_{Mn} + 0,3 \cdot w_{Cr} + 0,5 \cdot w_{Al} + \dfrac{w_{Al}}{w_{Mn}} + 2 \cdot \dfrac{w_{Si}}{w_{Mn}}}{8 + 2,5 \cdot x}$$

mit

$d_{min}$: minimale mittlere Schichtdicke in Mikrometer
$w_{Element}$: Massenanteile in % des jeweiligen Elements an der Stahlzusammensetzung
x: Sauerstoffgehalt in der eisenbasierten Vorbeschichtung in Massenprozent nach der Abscheidung (vor der Glühbehandlung)

Mit Mindest-Schichtdicken der eisenbasierten Vorbeschichtung gemäß den Gleichungen (5) und (6) lässt sich insbesondere eine hinreichend beziehungsweise hervorrangende Haftung des zinkbasierten Überzugs erzielen.

Der beschriebene Formelzusammenhang gemäß den Gleichungen (5) und (6) ist auch gültig, wenn beispielsweise das optionale Element Cr in der Stahllegierung nicht zulegiert wurde, sondern lediglich als unvermeidbares Begleitelement enthalten ist. In diesem Fall verringert sich der Wert des betreffenden Summanden 0,3 x $w_{cr}$ derart, dass dieser keinen relevanten Einfluss auf die Mindest-Schichtdicke der eisenbasierten Vorbeschichtung hat.

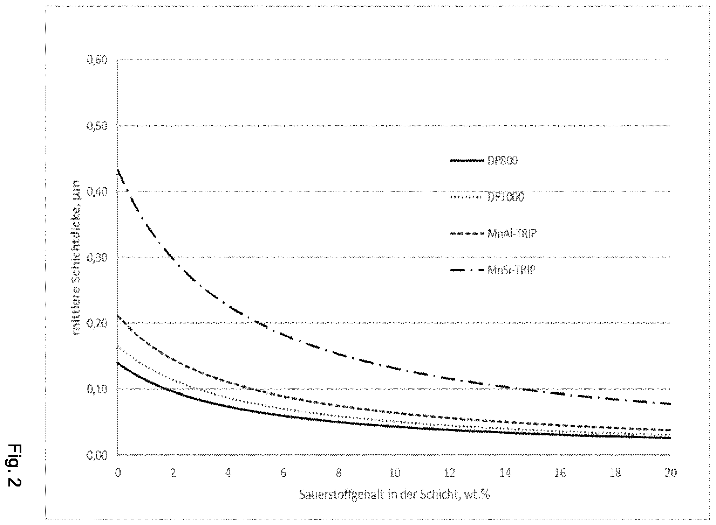

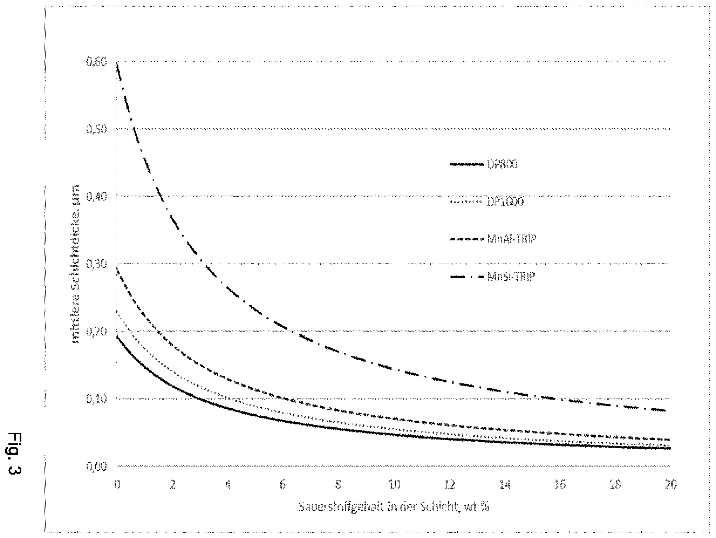

In den Figuren 2 und 3 sind beispielhaft die mittleren Mindest-Schichtdicken der eisenbasierten Vorbeschichtung für verschiedene Stahlgüten nach Tabelle 3 in Abhängigkeit vom Sauerstoffgehalt in der eisenbasierten Vorbeschichtung berechnet worden, die für eine hinreichend gute (Gleichung 5) oder hervorragende (Gleichung 6) Zinkhaftung benötigt werden.

Tabelle 3

| Stahlgüte | Si [%] | Mn [%] | Cr [%] | Al [%] | Al/Mn | Si/Mn |
|---|---|---|---|---|---|---|
| MnAl TRIP | 0,10 | 2,00 | 0,04 | 1,50 | 0,75 | 0,05 |
| MnSi TRIP | 1,90 | 2,10 | 0,05 | 0,03 | 0,01 | 0,90 |
| DP800 | 0,40 | 1,90 | 0,10 | 0,04 | 0,02 | 0,21 |

(fortgesetzt)

| Stahlgüte | Si [%] | Mn [%] | Cr [%] | Al [%] | Al/Mn | Si/Mn |
|---|---|---|---|---|---|---|
| DP1000 | 0,50 | 1,95 | 0,30 | 0,04 | 0,02 | 0,26 |

Das erfindungsgemäße Verfahren beinhaltet weiterhin einen Glühvorgang des mit einer aufgebrachten eisenbasierten Schicht versehenen Stahlbandes in einem Durchlaufglühofen. Dieser Ofen kann eine Kombination aus einem Ofenteil mit offener Verbrennung (DFF, Direct Fired Furnace / NOF, Non-Oxidizing Furnace) und einem danach angeordnetem Strahlrohrofen (RTF, Radiation Tube Furnace) sein oder aber in einem reinen Strahlrohrofen (All Radiant Tube Furnace) erfolgen. Das Stahlband wird bei einer Glühtemperatur von 700 °C bis 950 °C und einer mittleren Aufheizrate von 1 K/s bis 100 K/s, sowie einer Haltezeit des Stahlbandes auf Glühtemperatur zwischen 30 s und 650 s geglüht. Im Strahlrohrofen wird eine reduzierende Glühatmosphäre eingestellt, die 2 % bis 40 % $H_2$ und 98 % bis 60 % $N_2$ enthält. Der Taupunkt im Glühofen liegt dabei zwischen +15 °C und -70 °C.

Anschließend wird das Band auf eine Temperatur oberhalb der Schmelzbadtemperatur der zinkbasierten Schmelze abgekühlt und nachfolgend mit dem metallischen Überzug beschichtet. Optional kann nach der Glühbehandlung und vor der Beschichtung mit dem metallischen Überzug, das Band auf eine Temperatur zwischen 200 °C und 600 °C unterhalb der Schmelzbadtemperatur abgekühlt und bei dieser Temperatur für bis zu 500 s gehalten werden. Wird eine Temperatur unterhalb der Schmelzbadtemperatur der zinkbasierten Schmelze gewählt, um beispielsweise das Gefüge und die resultierenden technologischen Kennwerte des Stahls zu beeinflussen, so kann das Band vor dem Eintritt in das Schmelzbad beispielsweise durch eine induktive Erwärmung auf eine Temperatur oberhalb der Schmelzbadtemperatur auf 400 °C bis 750 °C wiedererwärmt werden, um dem Schmelzbad nicht durch das kalte Stahlband Wärme zu entziehen.

Ein beispielhafter vorteilhafter Verfahrensablauf für die Herstellung eines erfindungsgemäßen Stahlbandes mit verbesserter Haftung einer Schmelztauchverzinkung sieht vor, dass zunächst ein warmgewalztes Stahlband (Warmband) gebeizt, danach kaltgewalzt und anschließend in einer Feuerverzinkungslinie verzinkt wird. Innerhalb der Feuerverzinkungslinie durchläuft das Band eine Vorreinigungssektion. Nach der Vorreinigung durchläuft das Band weiter eine Bandaktivierung (Beize/Dekapierung) und nachfolgend eine oder mehrere Elektrolysezellen. In den Zellen wird eine eisenbasierte Schicht, die vorteilhaft mehr als 4 Massen-% Sauerstoff enthält, galvanisch abgeschieden. Das so beschichtete Band durchläuft anschließend Spüle und Trocknung. Anschließend läuft das Band in die Ofensektion der Verzinkungslinie ein, wird geglüht und verzinkt.

In einer vorteilhaften Ausgestaltung weist die zinkbasierte Schmelze für die Schmelztauchbeschichtung sowie der resultierende Schmelztauchüberzug auf dem Stahlflachprodukt 0,7 bis 3,0 Massen-% Magnesium und 1,0 bis 3,0 Massen-% Aluminium auf. Besonders vorteilhafte Eigenschaften des Überzugs ergeben sich, wenn die zinkbasierte Schmelze und der resultierende Schmelztauchüberzug auf dem Stahlband 0,8 bis 1,5 Massen-% Magnesium und 1,3 bis 2,2 Massen-% Aluminium enthält und der Aluminiumanteil höher als der Magnesium-Anteil ist und der Schmelztauchüberzug weniger als 1 Massen-% Eisen enthält.

Zudem weist das Stahlflachprodukt ein beidseitiges Auflagengewicht des Schmelztauchüberzugs von 50 bis 225 g/m$^2$, vorteilhaft von 70 bis 130 g/m$^2$, besonders vorteilhaft von 70 bis 100 g/m$^2$ auf.

**Patentansprüche**

1. Verfahren zur Herstellung eines schmelztauchbeschichteten, hochfesten Stahlflachproduktes mit folgenden Schritten:

   - Bereitstellen eines Stahlflachproduktes mit folgender chemischer Zusammensetzung in Massen-%:

     C: 0,04 bis 0,40, vorteilhaft 0,04 bis 0,30, besonders vorteilhaft 0,08 bis 0,23
     Mn: 0,8 bis 3,0, vorteilhaft 1,0 bis 2,5
     Si: $\leq$ 2,0, vorteilhaft $\leq$ 1,8, besonders vorteilhaft $\leq$ 1,5, insbesondere $\leq$ 0,7
     Al: 0,01 bis 2,0, vorteilhaft bis zu 0,8, besonders vorteilhaft bis zu 0,4
     P $\leq$ 0,1,
     S $\leq$ 0,005,
     N $\leq$ 0,02,
     sowie optional eines oder mehrere der folgenden Elemente:

       Cr: 0,1 bis 0,9, vorteilhaft 0,2 bis 0,7

B: 0,001 bis 0,008
Ti: 0,01 bis 0,1
V: 0,01 bis 0,2
Nb: 0,01 bis 0,1, vorteilhaft 0,02 bis 0,06
Mo: 0,05 bis 0,5, vorteilhaft 0,1 bis 0,25
Ni: 0,15 bis 0,5
Cu: 0,15 bis 0,2
Rest Eisen und unvermeidbare Verunreinigungen,

- Reinigen der Oberfläche des Stahlflachproduktes
- Aufbringen einer eisenbasierten Schicht als Vorbeschichtung auf die Oberfläche des Stahlflachproduktes mit einer mittleren Dicke zwischen 0,1 $\mu$m und 1,2 $\mu$m, wobei die eisenbasierte Beschichtung nach der Beschichtung und vor der Glühbehandlung Sauerstoff enthält
- Glühen in einer für Eisen reduzierenden Ofenatmosphäre bei Temperaturen oberhalb von 700 °C, wobei der dekadische Logarithmus aus dem Verhältnis von Wasserstoff- und Wasserpartialdruck in der Ofenatmosphäre dem folgenden Formelzusammenhang entspricht:

(1)

$$0,35 + 0,053\,x \leq lg\frac{p_{H_2}}{p_{H_2O}} \leq 3,1 + 0,09\,x$$

mit

x= Sauerstoffgehalt in der eisenbasierten Beschichtung in Massen-% nach der Abscheidung und vor der Glühbehandlung
$p_{H2}$= Wasserstoffpartialdruck in bar
$p_{H2O}$= Wasserpartialdruck in bar.

- Schmelztauchbeschichten des so behandelten und geglühten Stahlflachproduktes mit einer zinkbasierten Schmelze, die im Wesentlichen 0,5 bis 8,0 Massen-% Magnesium und 0,5 bis 8,0 Massen-% Aluminium enthält, weniger als 1 Massen-% Eisen, sowie unvermeidbare Verunreinigungen.

2. Verfahren nach Anspruch 1, **dadurch gekennzeichnet, dass** der dekadische Logarithmus aus dem Verhältnis von Wasserstoff- und Wasserpartialdruck in der Ofenatmosphäre dem folgenden Formelzusammenhang entspricht:

(2)

$$0,88 + 0,059\,x \leq lg\frac{p_{H_2}}{p_{H_2O}} \leq 2,6 + 0,08\,x$$

mit

x= Sauerstoffgehalt in der eisenbasierten Beschichtung in Massen-% nach der Abscheidung und vor der Glühbehandlung
$p_{H2}$= Wasserstoffpartialdruck in bar
$p_{H2O}$= Wasserpartialdruck in bar.

3. Verfahren nach Anspruch 1, **dadurch gekennzeichnet, dass** der dekadische Logarithmus aus dem Verhältnis von Wasserstoff- und Wasserpartialdruck in der Ofenatmosphäre dem folgenden Formelzusammenhang entspricht:

(3)

$$1,07 + 0,061\,x \leq lg\frac{p_{H_2}}{p_{H_2O}} \leq 2,4 + 0,07\,x$$

mit

x= Sauerstoffgehalt in der eisenbasierten Beschichtung in Massen-% nach der Abscheidung und vor der Glühbehandlung
$p_{H2}$= Wasserstoffpartialdruck in bar
$p_{H2O}$= Wasserpartialdruck in bar.

**4.** Verfahren nach Anspruch 1, **dadurch gekennzeichnet, dass** der dekadische Logarithmus aus dem Verhältnis von Wasserstoff- und Wasserpartialdruck in der Ofenatmosphäre dem folgenden Formelzusammenhang entspricht:

(4)

$$1{,}75 + 0{,}063\,x \le lg\,\frac{p_{H_2}}{p_{H_2O}} \le 2{,}4 + 0{,}07\,x$$

mit

x= Sauerstoffgehalt in der eisenbasierten Beschichtung in Massen-% nach der Abscheidung und vor der Glühbehandlung
$p_{H2}$= Wasserstoffpartialdruck in bar
$p_{H2O}$= Wasserpartialdruck in bar.

**5.** Verfahren nach mindestens einem der Ansprüche 1 bis 4, **dadurch gekennzeichnet, dass** die eisenbasierte Schicht mehr als 4 Massen-%, vorteilhaft 6-12 Massen-% Sauerstoff enthält.

**6.** Verfahren nach mindestens einem der Ansprüche 1 bis 5, **dadurch gekennzeichnet, dass** die mittlere Dicke der eisenbasierten Schicht mindestens $d_{min}$ nach folgendem formelmäßigen Zusammenhang entspricht:

(5)

$$d_{min} \ge \frac{1{,}2 \cdot w_{Si} + 0{,}3 \cdot w_{Mn} + 0{,}3 \cdot w_{Cr} + 0{,}5 \cdot w_{Al} + \frac{w_{Al}}{w_{Mn}} + 2 \cdot \frac{w_{Si}}{w_{Mn}}}{11 + 2{,}5 \cdot x}$$

vorteilhaft

(6)

$$d_{min} \ge \frac{1{,}2 \cdot w_{Si} + 0{,}3 \cdot w_{Mn} + 0{,}3 \cdot w_{Cr} + 0{,}5 \cdot w_{Al} + \frac{w_{Al}}{w_{Mn}} + 2 \cdot \frac{w_{Si}}{w_{Mn}}}{8 + 2{,}5 \cdot x}$$

mit

$d_{min}$: minimale mittlere Schichtdicke in Mikrometer
$w_{Element}$: Massenanteile in % des jeweiligen Elements an der Stahlzusammensetzung
x: Sauerstoffgehalt in der eisenbasierten Vorbeschichtung in Massenprozent nach der Abscheidung (vor der Glühbehandlung)

**7.** Verfahren nach mindestens einem der Ansprüche 1 bis 6, **dadurch gekennzeichnet, dass** die eisenbasierte Schicht elektrolytisch abgeschieden wird.

**8.** Verfahren nach mindestens einem der Ansprüche 1 bis 7, **dadurch gekennzeichnet, dass** das Glühen in einem Strahlrohrofen als Durchlaufglühofen durchgeführt wird, bei einer Glühtemperatur von 700 °C bis 950 °C und einer mittleren Aufheizrate von 1 K/s bis 100 K/s, mit einer reduzierenden Glühatmosphäre, bestehend aus 2 bis 40 %

$H_2$ und 98 bis 60 % $N_2$ und einem Taupunkt im Glühofen zwischen +15 und -70 °C und einer Haltezeit des Stahlbandes auf Glühtemperatur zwischen 30 s und 650 s mit optionaler anschließender Abkühlung auf eine Haltetemperatur zwischen 200 °C und 600 °C für bis zu 500 s mit anschließender optionaler induktiver Erwärmung auf eine Temperatur oberhalb der Schmelzbadtemperatur der zinkbasierten Schmelze auf 400 °C bis 750 °C und Durchführung der Beschichtung des Stahlflachproduktes mit dem metallischen Überzug.

9. Verfahren nach mindestens einem der Ansprüche 1 bis 8, **dadurch gekennzeichnet, dass** die zinkbasierte Schmelze 0,7 bis 3,0 Massen-% Magnesium und 1,0 bis 3,0 Massen-% Aluminium enthält.

10. Verfahren nach Anspruch 9, **dadurch gekennzeichnet, dass** die zinkbasierte Schmelze 0,8 bis 1,5 Massen-% Magnesium und 1,3 bis 2,2 Massen-% Aluminium enthält.

11. Verfahren nach Anspruch 9 oder 10, **dadurch gekennzeichnet, dass** der Gehalt an Aluminium größer ist als der Gehalt an Magnesium.

12. Schmelztauchbeschichtetes, hochfestes Stahlflachprodukt mit folgender chemischer Zusammensetzung des Stahlsubstrats in Massen-%:

    C: 0,04 bis 0,40, vorteilhaft 0,04 bis 0,30, besonders vorteilhaft 0,08 bis 0,23
    Mn: 0,8 bis 3,0, vorteilhaft 1,0 bis 2,5
    Si: ≤ 2,0, vorteilhaft ≤ 1,8, besonders vorteilhaft ≤ 1,5, insbesondere ≤ 0,7
    Al: 0,01 bis 2,0, vorteilhaft bis zu 0,8, besonders vorteilhaft bis zu 0,4
    P ≤ 0,1,
    S ≤ 0,005,
    N ≤ 0,02,
    sowie optional eines oder mehrere der folgenden Elemente:

    Cr: 0,1 bis 0,9, vorteilhaft 0,2 bis 0,7
    B: 0,001 bis 0,008
    Ti: 0,01 bis 0,1
    V: 0,01 bis 0,2
    Nb: 0,01 bis 0,1, vorteilhaft 0,02 bis 0,06
    Mo: 0,05 bis 0,5, vorteilhaft 0,1 bis 0,25
    Ni: 0,15 bis 0,5
    Cu: 0,15 bis 0,2
    Rest Eisen und unvermeidbare Verunreinigungen,
    mit einer auf dem Stahlsubstrat aufgebrachten eisenbasierten Schicht als Vorbeschichtung mit einer mittleren Dicke zwischen 0,1 μm und 1,2 μm und einem Sauerstoffgehalt von mehr als 4 Massen-%, vorteilhaft 6 bis 12 Massen-% und einer auf der Vorbeschichtung aufgebrachten Schmelztauchbeschichtung, die neben Zink als Hauptbestandteil im Wesentlichen 0,5 bis 8,0 Massen-% Magnesium und 0,5 bis 8,0 Massen-% Aluminium und weniger als 1 Massen-% Eisen enthält, sowie unvermeidbare Verunreinigungen.

13. Verwendung eines nach mindestens einem der Ansprüche 1 bis 11 hergestellten Stahlflachproduktes oder eines Stahlflachproduktes nach Anspruch 12 zur Herstellung von Teilen für Kraftfahrzeuge.

**Claims**

1. Method for producing a hot-dip coated, high-strength, flat steel product, having the following steps:

    - Providing a flat steel product having the following chemical composition in mass %:

    C: 0.04 to 0.40, advantageously, 0.04 to 0.30, particularly advantageously 0.08 to 0.23
    Mn: 0.8 to 3.0, advantageously 1.0 to 2.5
    Si: ≤ 2.0, advantageously ≤ 1.8, particularly advantageously ≤ 1.5, in particular ≤ 0.7
    Al: 0.01 to 2.0, advantageously up to 0.8, particularly advantageously up to 0.4
    P ≤ 0.1,
    S ≤ 0.005,

$N \leq 0.02$,
and, optionally, one or more of the following elements:

Cr: 0.1 to 0.9, advantageously 0.2 to 0.7
B: 0.001 to 0.008
Ti: 0.01 to 0.1
V: 0.01 to 0.2
Nb: 0.01 to 0.1, advantageously 0.02 to 0.06
Mo: 0.05 to 0.5, advantageously 0.1 to 0.25
Ni: 0.15 to 0.5
Cu: 0.15 to 0.2
remainder iron and unavoidable impurities,

- cleaning the surface of the flat steel product
- applying an iron-based layer to the surface of the flat steel product as pre-coating with an average thickness of between 0.1 $\mu$m and 1.2 $\mu$m, wherein the iron-based coating after the coating and before the annealing treatment contains oxygen
- annealing in an iron-reducing furnace atmosphere at temperatures above 700 °C, wherein the decadic logarithm from the ratio of hydrogen partial pressure and water partial pressure in the furnace atmosphere corresponds to the following formula:

(1)

$$0.35 + 0.053\,x \leq lg\,\frac{p_{H_2}}{p_{H_2O}} \leq 3.1 + 0.09\,x$$

where

x = oxygen content in the iron-based coating in mass % after deposition and before the annealing treatment
$p_{H2}$ = hydrogen partial pressure in bar
$p_{H2O}$ = water partial pressure in bar.

- hot-dip coating the thus treated and annealed flat steel product with a zinc-based melt containing substantially 0.5 to 8.0 mass % magnesium and 0.5 to 8.0 mass % aluminium, less than 1 mass % iron, and unavoidable impurities.

2. Method according to claim 1, **characterised in that** the decadic logarithm from the ratio of hydrogen partial pressure and water partial pressure in the furnace atmosphere corresponds to the following formula:

(2)

$$0.88 + 0.059\,x \leq lg\,\frac{p_{H_2}}{p_{H_2O}} \leq 2.6 + 0.08\,x$$

where

x = oxygen content in the iron-based coating in mass % after deposition and before the annealing treatment
$p_{H2}$= hydrogen partial pressure in bar
$p_{H2O}$= water partial pressure in bar.

3. Method according to claim 1, **characterised in that** the decadic logarithm from the ratio of hydrogen partial pressure and water partial pressure in the furnace atmosphere corresponds to the following formula:

EP 3 816 319 B1

(3)

$$1.07 + 0.061\,x \le lg\,\frac{p_{H_2}}{p_{H_2O}} \le 2.4 + 0.07\,x$$

where

x = oxygen content in the iron-based coating in mass % after deposition and before the annealing treatment
$p_{H2}$ = hydrogen partial pressure in bar
$p_{H2O}$ = water partial pressure in bar.

4. Method according to claim 1, **characterised in that** the decadic logarithm from the ratio of hydrogen partial pressure and water partial pressure in the furnace atmosphere corresponds to the following formula:

(4)

$$1.75 + 0.063\,x \le lg\,\frac{p_{H_2}}{p_{H_2O}} \le 2.4 + 0.07\,x$$

where

x = oxygen content in the iron-based coating in mass % after deposition and before the annealing treatment
$p_{H2}$ = hydrogen partial pressure in bar
$p_{H2O}$ = water partial pressure in bar.

5. Method according to at least one of claims 1 through 4, **characterised in that** the iron-based layer contains more than 4 mass % oxygen, and, advantageously, 6-12 mass % oxygen.

6. Method according to at least one of claims 1 through 5, **characterised in that** the average thickness of the iron-based layer corresponds to at least $d_{min}$ according to the following formulaic relationship:

(5)

$$d_{min} \ge \frac{1.2 \cdot w_{Si} + 0.3 \cdot w_{Mn} + 0.3 \cdot w_{Cr} + 0.5 \cdot w_{Al} + \dfrac{w_{Al}}{w_{Mn}} + 2 \cdot \dfrac{w_{Si}}{w_{Mn}}}{11 + 2.5 \cdot x}$$

advantageously

(6)

$$d_{min} \ge \frac{1.2 \cdot w_{Si} + 0.3 \cdot w_{Mn} + 0.3 \cdot w_{Cr} + 0.5 \cdot w_{Al} + \dfrac{w_{Al}}{w_{Mn}} + 2 \cdot \dfrac{w_{Si}}{w_{Mn}}}{8 + 2.5 \cdot x}$$

where

$d_{min}$: minimal average layer thickness in micrometres
$w_{Element}$: mass fractions in % of the respective element in the steel composition
x: oxygen content in the iron-based coating in mass % after deposition (before the annealing treatment)

7. Method according to at least one of claims 1 through 6, **characterised in that** the iron-based layer is deposited electrolytically.

16

**8.** Method according to at least one of claims 1 through 7, **characterised in that** the annealing is carried out in a radiant tube furnace as continuous annealing furnace, at an annealing temperature of 700 °C to 950 °C and a mean heating rate of 1 K/s to 100 K/s, with a reducing annealing atmosphere consisting of 2 to 40% $H_2$ and 98 to 60% $N_2$ and a dew point in the annealing furnace between +15 and -70 °C and a dwell time of the steel strip at annealing temperature between 30 s and 650 s with optional subsequent cooling to a dwell temperature between 200 °C and 600 °C for up to 500 s with subsequent optional inductive heating to a temperature above the molten bath temperature of the zinc-based melt to 400 °C to 750 °C and application of the coating of the flat steel product with the metallic coating.

**9.** Method according to at least one of claims 1 through 8, **characterised in that** the zinc-based melt contains 0.7 to 3.0 mass % magnesium and 1.0 to 3.0 mass % aluminium.

**10.** Method according to claim 9, **characterised in that** the zinc-based melt contains 0.8 to 1.5 mass % magnesium and 1.3 to 2.2 mass % aluminium.

**11.** Method according to claim 9 or 10. **characterised in that** the aluminium content is greater than the magnesium content.

**12.** Hot-dip coated, high-strength, flat steel product having the following chemical composition of the steel substrate in mass %:

C: 0.04 to 0.40, advantageously 0.04 to 0.30, particularly advantageously 0.08 to 0.23
M: 0.8 to 3.0, advantageously 1.0 to 2.5
Si: $\leq$ 2.0, advantageously $\leq$ 1.8, particularly advantageously $\leq$ 1.5, in particular $\leq$ 0.7
Al: 0.01 to 2.0, advantageously up to 0.8, particularly advantageously up to 0.4
P $\leq$ 0.1,
S $\leq$ 0.005,
N $\leq$ 0.02,
and, optionally, one or more of the following elements:

Cr: 0.1 to 0.9, advantageously, 0.2 to 0.7
B: 0.001 to 0.008
Ti: 0.01 to 0.1
V: 0.01 to 0.2
Nb: 0.01 to 0.1, advantageously 0.02 to 0.06
Mo: 0.05 to 0.5, advantageously 0.1 to 0.25
Ni: 0.15 to 0.5
Cu: 0.15 to 0.2
remainder iron and unavoidable impurities,
having an iron-based layer applied to the steel substrate as pre-coating with an average thickness of between 0.1 $\mu$m and 1.2 $\mu$m and an oxygen content of more than 4 mass % - advantageously, 6 to 12 mass % - and a hot-dip coating applied to the pre-coating, which, in addition to zinc as the main constituent, substantially contains 0.5 to 8.0 mass % magnesium and 0.5 to 8.0 mass % aluminium and less than 1 mass % iron, as well as unavoidable impurities.

**13.** Use of a flat steel product produced according to at least one of claims 1 through 11 or a flat steel product according to claim 12 for the production of parts for motor vehicles.

**Revendications**

**1.** Procédé de production d'un produit plat en acier à haute résistance revêtu par immersion à chaud, ledit procédé comprenant les étapes suivantes :

- fournir un produit plat en acier ayant la composition chimique suivante en % en masse:

C: 0,04 à 0,40, avantageusement 0,04 à 0,30, de manière particulièrement avantageuse 0,08 à 0,23,
Mn: 0,8 à 3,0, avantageusement 1,0 à 2,5,

Si: ≤ 2,0, avantageusement ≤ 1,8, de manière particulièrement avantageuse ≤ 1,5, notamment ≤ 0,7,
Al: 0,01 à 2,0, avantageusement jusqu'à 0,8, de manière particulièrement avantageuse jusqu'à 0,4,
P: ≤ 0,1,
S: ≤ 0,005,
N: ≤ 0,02,
et éventuellement un ou plusieurs des éléments suivants :

> Cr: 0,1 à 0,9, avantageusement 0,2 à 0,7 ,
> B: 0,001 à 0,008
> Ti: 0,01 à 0,1
> V: 0,01 à 0,2,
> Nb: 0,01 à 0,1, avantageusement 0,02 à 0,06
> Mo: 0,05 à 0,5, avantageusement 0,1 à 0,25,
> Ni: 0,15 à 0,5,
> Cu: 0,15 jausqu'à 0,2,
> le reste étant du fer et des impuretés inévitables,

- nettoyer la surface du produit plat en acier,
- appliquer une couche à base de fer comme pré-revêtement sur la surface du produit plat en acier avec une épaisseur moyenne comprise entre 0,1 µm et 1,2 µm, le revêtement à base de fer contenant de l'oxygène après le revêtement et avant le traitement de recuit,
- recuire dans une atmosphère de four réductrice pour le fer à des températures supérieures à 700 °C, le logarithme décimal du rapport des pressions partielles de l'hydrogène et de l'eau dans l'atmosphère du four correspondant à la formule suivante:

(1)

$$0,35 + 0,053\,x \leq lg\,\frac{p_{H_2}}{p_{H_2O}} \leq 3,1 + 0,09\,x$$

avec

> x = teneur en oxygène dans le revêtement à base de fer en % masse après dépôt et avant recuit,
> $p_{H2}$ = pression partielle de l'hydrogène en bar
> $p_{H2O}$ = pression partielle de l'eau en bar.

- revêtir par immersion à chaud le produit plat en acier ainsi traité et recuit avec une matière en fusion à base de zinc contenant sensiblement 0,5 à 8,0 % en masse de magnésium et 0,5 à 8,0 % en masse d'aluminium, moins de 1 % en masse de fer, et des impuretés inévitables.

2. Procédé selon la revendication 1, **caractérisé en ce que** le logarithme décimale du rapport des pressions partielles de l'hydrogène et de l'eau dans l'atmosphère du four correspond à la formule suivante:

(2)

$$0,88 + 0,059\,x \leq lg\,\frac{p_{H_2}}{p_{H_2O}} \leq 2,6 + 0,08\,x$$

avec

> x = teneur en oxygène dans le revêtement à base de fer en % en masse après dépôt et avant recuit,
> $p_{H2}$ = pression partielle de l'hydrogène en bar,
> $P_{H2O}$ = pression partielle de l'eau en bar.

3. Procédé selon la revendication 1, **caractérisé en ce que** le logarithme décimal du rapport des pressions partielles de l'hydrogène et de l'eau dans l'atmosphère du four correspond à la formule suivante:

(3)

$$1{,}07 + 0{,}061\,x \le lg\,\frac{p_{H_2}}{p_{H_2O}} \le 2{,}4 + 0{,}07\,x$$

avec

x = teneur en oxygène dans le revêtement à base de fer en % en masse après dépôt et avant recuit,
$p_{H2}$ = pression partielle de l'hydrogène en bar,
$P_{H2O}$ = pression partielle de l'eau en bar.

4. Procédé selon la revendication 1, **caractérisé en ce que** le logarithme décimale du rapport des pressions partielles de l'hydrogène et de l'eau dans l'atmosphère du four correspond à la formule suivante:

(4)

$$1{,}75 + 0{,}063\,x \le lg\,\frac{p_{H_2}}{p_{H_2O}} \le 2{,}4 + 0{,}07\,x$$

avec

x = teneur en oxygène dans le revêtement à base de fer en % en masse après dépôt et avant recuit,
$p_{H2}$ = pression partielle de l'hydrogène en bar,
$P_{H2O}$ = pression partielle de l'eau en bar.

5. Procédé selon l'une au moins des revendications 1 à 4, **caractérisé en ce que** la couche à base de fer contient plus de 4 % en masse, avantageusement de 6 à 12 % en masse, d'oxygène.

6. Procédé selon l'une au moins des revendications 1 à 5, **caractérisé en ce que** l'épaisseur moyenne de la couche à base de fer correspond à au moins $d_{min}$ selon la formule suivante: (5)

$$d_{min} \ge \frac{1{,}2 \cdot w_{Si} + 0{,}3 \cdot w_{Mn} + 0{,}3 \cdot w_{Cr} + 0{,}5 \cdot w_{Al} + \dfrac{w_{Al}}{w_{Mn}} + 2 \cdot \dfrac{w_{Si}}{w_{Mn}}}{11 + 2{,}5 \cdot x}$$

avantageusement

(6)

$$d_{min} \ge \frac{1{,}2 \cdot w_{Si} + 0{,}3 \cdot w_{Mn} + 0{,}3 \cdot w_{Cr} + 0{,}5 \cdot w_{Al} + \dfrac{w_{Al}}{w_{Mn}} + 2 \cdot \dfrac{w_{Si}}{w_{Mn}}}{8 + 2{,}5 \cdot x}$$

avec

dmin: épaisseur moyenne minimale de la couche en micromètre,
$W_{Élément}$: pourcentage en masse de l'élément respectif dans la composition de l'acier
x: teneur en oxygène dans le pré-revêtement à base de fer en pourcentage en masse après dépôt (avant recuit).

7. Procédé selon l'une au moins des revendications 1 à 6, **caractérisé en ce que** la couche à base de fer est déposée par voie électrolytique.

**8.** Procédé selon l'une au moins des revendications 1 à 7, **caractérisé en ce que** le recuit est réalisé dans un four tubulaire radiant comme four de recuit continu à une température de recuit de 700 °C à 950 °C et une vitesse de chauffe moyenne de 1 K/s à 100 K/s, avec une atmosphère de recuit réductrice comprenant 2 à 40 % de $H_2$ et 98 à 60 % de $N_2$ et un point de rosée dans le four de recuit compris entre +15 et -70 °C et une durée de maintien de la bande d'acier à la température de recuit entre 30 s et 650 s avec refroidissement ultérieur facultatif à une température de maintien entre 200 °C et 600 °C pendant une durée pouvant atteindre 500 s avec chauffage inductif facultatif ultérieur à une température supérieure à la température du bain de fusion de la matière en fusion à base de zinc de 400°C à 750°C et réaliser le revêtement du produit plat en acier avec le revêtement métallique.

**9.** Procédé selon l'une au moins des revendications 1 à 8, **caractérisé en ce que** la matière en fusion à base de zinc contient 0,7 à 3,0 % en masse de magnésium et 1,0 à 3,0 % en masse d'aluminium.

**10.** Procédé selon la revendication 9, **caractérisé en ce que** la matière en fusion à base de zinc contient 0,8 à 1,5 % en masse de magnésium et 1,3 à 2,2 % en masse d'aluminium.

**11.** Procédé selon la revendication 9 ou 10, **caractérisé en ce que** la teneur en aluminium est supérieure à la teneur en magnésium.

**12.** Produit plat en acier à haute résistance revêtu par immersion à chaud, le substrat en acier ayant la composition chimique suivante en % en masse :

C : 0,04 à 0,40, avantageusement 0,04 à 0,30, de manière particulièrement avantageuse 0,08 à 0,23,
Mn: 0,8 à 3,0, avantageusement 1,0 à 2,5,
Si: $\leq$ 2,0, avantageusement $\leq$ 1,8, de manière particulièrement avantageuse $\leq$ 1,5,
notamment $\leq$ 0,7,
Al: 0,01 à 2,0, avantageusement jusqu'à 0,8, de manière particulièrement avantageuse jusqu'à 0,4,
P: $\leq$ 0,1,
S: $\leq$ 0,005,
N: $\leq$ 0,02,
et éventuellement un ou plusieurs des éléments suivants :

Cr: 0,1 à 0,9, avantageusement 0,2 à 0,7,
B: 0,001 à 0,008
Ti: 0,01 à 0,1
V: 0,01 à 0,2,
Nb: 0,01 à 0,1, avantageusement 0,02 à 0,06
Mo: 0,05 à 0,5, avantageusement 0,1 à 0,25,
Ni: 0,15 à 0,5,
Cu: 0,15 jusqu'à 0,2,
le reste étant du fer et des impuretés inévitables,
une couche à base de fer étant appliquée sur le substrat d'acier comme pré-revêtement d'une épaisseur moyenne comprise entre 0,1 $\mu$m et 1,2 $\mu$m et ayant une teneur en oxygène supérieure à 4 % en masse, avantageusement de 6 à 12 % en masse et un revêtement par immersion à chaud étant appliqué sur le pré-revêtement qui contient outre le zinc comme composant principal sensiblement 0,5 à 8,0 % en masse de magnésium et 0,5 à 8,0 % en masse d'aluminium et moins de 1 % en masse de fer, ainsi que des impuretés inévitables.

**13.** Utilisation d'un produit plat en acier réalisé selon l'une au moins des revendications 1 à 11 ou d'un produit plat en acier selon la revendication 12 pour produire des pièces pour véhicules automobiles.

Fig.1

Fig. 2

Fig. 3

23

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019154680 A1
- DE 202015104790 U1
- EP 3170913 A1
- DE 102018107435 A1
- EP 3034646 A1
- DE 102011117572 A1
- WO 2008102009 A1
- WO 2013007578 A2
- DE 69312003 T2